# FASCICULE DE BREVET EUROPEEN

(11) **EP 0 594 515 B1**
(45) Date de publication et mention de la délivrance du brevet: **05.03.1997**
(21) Numéro de dépôt: 93420403.3
(22) Date de dépôt: 14.10.1993
(51) Int. Cl.: F16D 66/02

(54) **Témoin d'usure de plaquette de frein pour véhicule automobile**
Abnutzungswarnsensor für Kraftfahrzeugbremsbelag
Automotive brake lining wear detector

(30) Priorité: 20.10.1992 FR 9212820
(43) Date de publication de la demande: 27.04.1994
(73) Titulaire: COMPAGNIE FRANCAISE DE CABLAGE, F-21000 Dijon (FR)
(72) Inventeur: Scrabalat, Philippe, F-38180 Seyssins (FR)
(74) Mandataire: Faber, Jean-Paul

(56) Documents cités:
- GB-A- 2 115 893
- GB-A- 2 231 928

## Description

De manière connue, de tels témoins se présentent sous la forme d'un câble électrique, gainé dans un matériau isolant, et comportant à son extrémité un embout également réalisé en un matériau isolant, venant se fixer au niveau de la plaquette dont on désire détecter l'usure. Lorsque la plaquette s'use, et atteint le fil électrique, il se crée un contact matérialisant, notamment au niveau du tableau de bord du véhicule, l'usure de la plaquette. Un tel témoin est par exemple décrit dans le document GB-A-2 115 893, qui prévoit en outre que l'embout de fixation du témoin sur la plaquette présente une fente ou rainure terminale, au niveau de laquelle est inséré le conducteur métallique préalablement plié en forme de U.

Cet embout, destiné à venir se fixer au niveau d'un siège ménagé à cet effet dans la plaquette, est généralement réalisé en polysulfure de phénylène (PPS), en polyamide 6,6, en polyamide 46, en polyether ethercétone (PEEK), ou en tout autre matériau présentant des caractéristiques thermiques et mécaniques au moins équivalentes. Il est surmoulé sur l'extrémité du câble électrique, lui-même gainé notamment de polychlorure de vinyl (PVC). La réalisation de ces témoins est très difficilement automatisable, compte tenu que la fixation effective du témoin sur la plaquette s'effectue, après sa mise en place dans le siège prévu à cet effet, par coopération de l'embout avec une rondelle-frein, insérée sur le câble préalablement au surmoulage de l'embout sur l'extrémité du cable. En effet, une telle rondelle-frein, du fait de sa trop grande légèreté et de sa faible épaisseur est difficilement distribuable en automatique, et donc, ne permet pas d'aboutir à une fiabilité à 100 % de la réalisation de ces témoins d'usure. En outre, afin de présenter une efficacité réelle, cette rondelle présente des ergots dirigés vers l'autre extrémité du témoin, de telle sorte à mordre sur l'embout pour s'opposer à son retrait. Or, il n'est pas rare d'observer des montages inversés desdites rondelles, voire même un oubli pur et simple de celle-ci, affectant ainsi la fiabilité de la fixation, et partant la détection d'usure elle-même.

Enfin, dans le cadre d'accords commerciaux, il est fréquent que dès lors que l'une des pièces d'un chargement, et dans le cas d'espèce, l'un des témoins d'usure présente un défaut, la totalité du stock livré soit retournée au fabricant ou au distributeur, charge à lui de faire le tri entre les pièces conformes à la commande et les pièces présentant un défaut, engendrant des pertes de temps non négligeables.

L'objet de l'invention est de proposer un témoin d'usure pour plaquettes de frein s'affranchissant de ces différents inconvénients, et notamment susceptible d'être fixé au niveau de la plaquette sans nécessiter une quelconque pièce additionnelle.

Ce témoin d'usure comprend un câble électrique isolé dans une gaine plastique, destiné à acheminer un signal électrique signalant l'usure de la plaquette, et comportant à l'une de ses extrémités un embout entourant le câble, et susceptible d'être reçu dans le siège de la plaquette prévu à cet effet. Cet embout se termine par une collerette formant butée pour permettre son maintien. Ledit embout étant destiné à être inséré en force dans le siège de la plaquette.

Selon l'invention, cet embout est surmoulé sur le câble et présente une fente longitudinale, s'étendant radialement de la zone centrale adjacente au câble jusqu'à la périphérie, et ce sur toute la longueur de l'embout, à l'exception de la collerette.

Ainsi, de par la présence de cette fente, cet embout peut être inséré en force au niveau du siège de la plaquette qui, afin de permettre cette insertion, présente une lumière traversante, cette fente permettant la compression de l'embout sur la gaine PVC, ou PTFE (polytétrafluoroéthylène) du câble, et partant sa coopération avec la périphérie interne du siège de la plaquette. Il n'est donc plus nécessaire de faire appel à une quelconque pièce additionnelle, notamment à une rondelle-frein. Selon l'invention, cet embout profilé présente une zone cylindrique tronquée sur toute sa longueur au niveau du câble, et se prolongeant au niveau de la fente par une zone parallélipipédique, dont le plan médian est constitué par la fente proprement dite.

De la sorte, il y a coopération entre la zone parallépipédique et la lumière traversante de la plaquette, interdisant la rotation du câble et donc du témoin au niveau du siège de ladite plaquette.

Avantageusement, les faces latérales de la zone parallépipédique comportent des nervures perpendiculaires au câble, destinées à augmenter l'efficacité de la coopération entre ladite lumière du siège de la plaquette et la dite zone parallépipédique, et partant, à favoriser la fixation dudit embout à ce niveau.

Avantageusement, le diamètre de la zone cylindrique et la largeur de la zone parallépipédique de l'embout sont plus importants que le diamètre de l'orifice du siège et que la largeur de la lumière du siège de la plaquette, et ce, afin d'assurer une réelle compression et donc coopération de ces deux éléments.

Avantageusement, seule la zone de l'embout destiné à coopérer avec le siège et la lumière de la plaquette présente cette surépaisseur, et ce sur une longueur correspondant à l'épaisseur du siège.

L'embout est réalisé en un matériau choisi dans le groupe comprenant le polysulfure de phénylène, le polyamide 6,6, le polyamide 46, le polyether ethercétone, et tout autre matériau présentant des caractéristiques thermiques et mécaniques au moins équivalentes.

Enfin, dans une version avantageuse de l'invention, l'embout présente une gorge se prolongeant par une fente au niveau de la jonction entre l'embout et la collerette, et correspondant sensiblement au périmètre de l'intersection dudit embout avec la collerette.

La manière dont l'invention peut être réalisée et les avantages qui en découlent ressortiront mieux de l'exemple de réalisation qui suit donné à titre indicatif et non limitatif à l'appui des figures annexées.

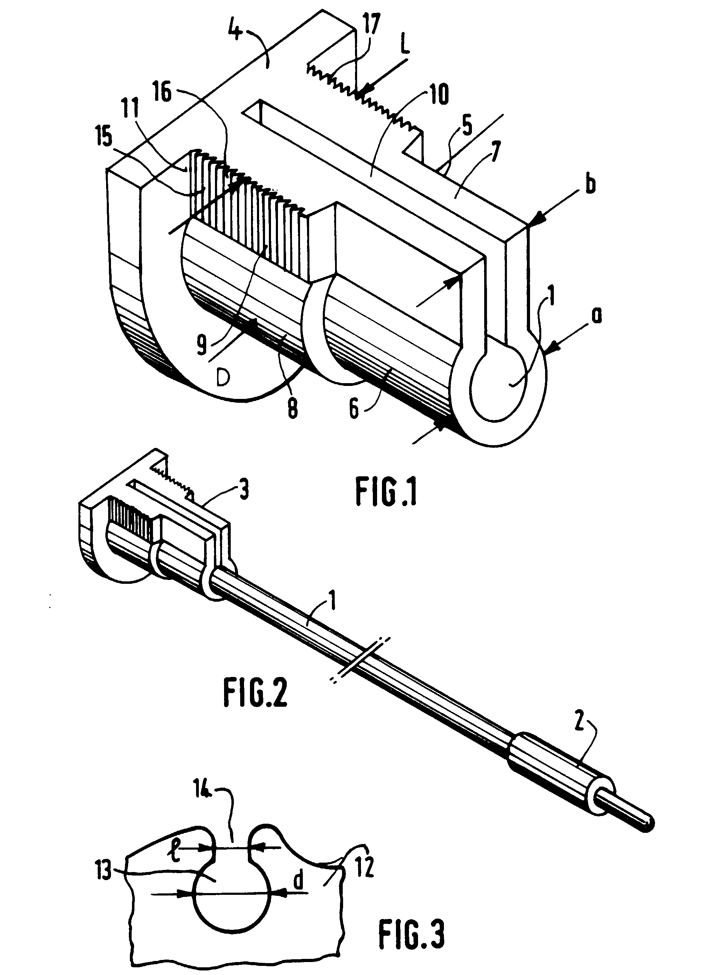

La figure 1 est une représentation schématique en perspective du témoin d'usure conforme à l'invention.

La figure 2 est une représentation schématique en perspective de l'embout conforme à l'invention.

La figure 3 est une représentation schématique en coupe d'une partie de la plaquette de frein destinée à recevoir ledit embout.

Le témoin conforme à l'invention comporte fondamentalement un câble électrique (1) isolé au moyen d'une gaine plastique, typiquement réalisée en PVC (polychlorure de vinyl). L'une des extrémités de ce câble reçoit une prise mâle (2), destinée à s'enficher dans la prise femelle correspondante du tableau de bord ou d'un circuit relai destiné à acheminer l'information, par exemple sous la forme d'un signal lumineux au tableau de bord du véhicule considéré.

L'autre extrémité de ce câble (1) comporte un embout (3), surmoulé sur le câble (1) muni de sa gaine PVC, et destiné à permettre sa fixation au niveau du siège (13) d'une plaquette de frein (12).

De manière connue, une telle plaquette de frein, destinée à coopérer avec la surface d'un disque solidaire de la roue du véhicule, est réalisée en un matériau à friction, tel que par exemple commercialisé sous la marque déposée Ferodo. Compte tenu de cette friction, et malgré le matériau qui la compose, une telle plaquette s'use à la longue et doit être régulièrement remplacée lorsque cette usure atteind une certaine limite. L'objet de ce témoin d'usure est de justement matérialiser visuellement, voire auditivement cette usure pour la signaler à l'utilisateur du véhicule.

Selon l'invention, l'embout (3) est typiquement réalisé en polysulfure de phénylène (RYTON - marque déposée), voire en polybutylène téréphtalate, voire même en polyamide 6,6 (NYLON - marque déposée). Celui-ci est donc surmoulé sur le câble (1), et ce de manière automatique.

Cet embout (3) comporte deux parties, à savoir tout d'abord une collerette (4), destinée à prendre appui sur la périphérie du siège (13) de la plaquette (12), et d'autre part, l'embout proprement dit (5) destiné à assurer la fixation proprement dite du témoin sur ladite plaquette.

Selon une caractéristique importante de l'invention, cet embout (5) comporte deux parties, respectivement (6) et (7), à savoir :
- une première partie cylindrique (6) entourant le câble (1), et tronquée à sa partie supérieure,
- une partie parallélipipédique (7) se prolongeant radialement à partir de la troncature de la partie cylindrique (6), et présentant une fente (10) s'étendant également radialement du centre de la partie cylindrique (6) jusqu'à la partie supérieure de la partie parallépipédique (7).

De la sorte, de par la présence de cette fente, une compression peut s'exercer au niveau de la gaine PVC du câble (1), de telle sorte à permettre l'insertion en force dudit embout au niveau du siège (13,14) de la plaquette (12), et partant la coopération ferme entre ledit embout (5) et la paroi interne du siège (13).

Plus précisément, l'embout (5) présente au niveau de la zone immédiatement adjacent à la collerette (4), une surépaisseur, tant au niveau de la zone parallélipipédique (7) que de la zone cylindrique (6), respectivement (9) et (8), dont la longueur correspond à l'épaisseur du siège (13). De fait, le diamètre externe **D** de la zone cylindrique (8) est légèrement supérieur au diamètre interne **d** du siège (13) de la plaquette (12). De même, l'épaisseur **L** de la partie parallélépipèdique (9) est légèrement supérieure à la largeur **l** de la lumière (14) joignant le siège (13) à la périphérie de ladite plaquette (12).

Il y a donc une coopération ferme et étroite de ces zones (9) et (8) respectivement avec la lumière (14) et le siège (13) de la plaquette, compte tenu que la différence de dimensions induit une compresion de la paroi interne du siège (13) et de la lumière (14) sur l'embout (5), compression repercutée de par la présence de la fente (10) sur la gaine PVC du câble (1). C'est par ailleurs la relative souplesse de cette gaine PVC qui permet d'absorber cette compression, et partant d'assurer la fixation de l'embout sur la plaquette.

En revanche, la largeur **b** de la partie parallélipipédique (7) correspond à la largeur **l** de la lumière (14), et le diamètre externe **a** de la partie cylindrique (6) correspond au diamètre interne **d** dudit siège (13).

De la sorte, afin de mettre en place cet embout au niveau du siège (13) de la plaquette, il suffit d'introduire le câble (1) dans le siège (13) par la prise mâle (2), et de le faire coulisser jusqu'à faire coopérer tout d'abord les zones (6) et (7) avec le siège (13) et (14), ces zones étant de dimensions équivalentes glissent simplement, et enfin les zones (8) et (9) avec les mêmes siège (13) et lumière (14) en forcant sur la collerette (4) par un simple appui. Cette opération est en outre aisément automatisable, augmentant la rentabilité de réalisation et en outre, optimisant la fixation.

Afin d'optimiser encore cette fixation, les faces latérales (16) et (17) de la zone surépaissie (9) de la partie parallépipédique sont munies de nervures parallèles (15) perpendiculaires au câble (1) et parallèles au plan défini par la fente (10). Ces nervures coopèrent avec la lumière (14) du siège, et s'opposent au déplacement de l'embout hors dudit siège, après sa mise en place

Enfin, selon une caractéristique avantageuse de l'invention, l'embout présente au niveau de sa jonction avec la collerette (4) une gorge (11) s'étendant d'une part, le long des deux faces latérales (16) et (17) de la partie parallélépipèdique (9) et se prolonge tout autour de la zone cylindrique (8). En d'autres termes, cette gorge (11) correspond au périmètre de l'intersection de l'embout (5) avec la collerette (4). Elle est destinée à recueillir les éventuels copeaux et autres poussières susceptibles d'être créés lors du clipsage en force de l'embout sur le siège (13) de la plaquette (12). De la sorte, on n'observe pas de légers traversements de l'embout, et partant, la collerette (4) est parfaitement plaquée contre la plaquette (12), remplissant ainsi de manière optimum son rôle de témoin d'usure.

On conçoit ainsi qu'avec le témoin d'usure conforme à l'invention, on facilite de manière importante l'étape de mise en place de ce témoin. En outre, on observe que sa fabrication est aisément automatisable, sans nécessiter de recourir à des installations onéreuses.

Enfin, de par sa structure, la fixation du témoin d'usure est optimisée, favorisant les bonnes conditions de détection d'usure.

## Revendications

1. Témoin d'usure de plaquette de frein pour véhicule automobile comprenant un câble électrique (1) isolé dans une gaine plastique, et destiné à acheminer un signal électrique signalant l'usure de la plaquette (12) à laquelle il est fixé, et comportant à l'une de ses extrémités un embout (5), susceptible d'être reçu dans le siège (13) prévu à cet effet dans la partie postérieure de la plaquette (12), ledit embout (5) se terminant par une collerette (4) formant butée destinée à prendre appui sur la zone périphérique au siège (13) de la plaquette (12), ledit embout étant destiné à être inséré en force dans le siège (13) de ladite plaquette (12), ***caractérisé*** en ce que l'embout (5) est surmoulé sur le câble (1) et en ce qu'il présente une fente longitudinale (10), s'étendant radialement de la zone centrale adjacente au câble (1) jusqu'à la périphérie, et ce, sur toute la longueur de l'embout (5) à l'exception de la collerette (4).

2. Témoin d'usure selon la revendication 1, ***caractérisé*** en ce que l'embout (5) présente une zone cylindrique (8) tronquée sur toute sa longueur au niveau du câble (1), se prolongeant au niveau de la fente (10) par une zone parallélipipédique (9), dont le plan médian est constitué par la fente proprement dite, lesdites zones cylindrique (8) et parallélépipèdique (9) étant destinées à coopérer respectivement avec le siège (13) et une lumière (14) joignant ledit siège (13) à la périphérie de la plaquette (12).

3. Témoin d'usure selon la revendication 2, ***caractérisé*** en ce que les zones, respectivement cylindrique (8) et parallélépipèdique (9) se prolongent en des zones de même forme, mais respectivement de diamètre et d'épaisseur inférieurs.

4. Témoin d'usure selon l'une des revendications 2 et 3, ***caractérisé*** en ce que les faces latérales (16,17) de la zone parallépipédique (9) comportent des nervures (16) perpendiculaires au câble (1), destinées à coopérer avec la lumière (14) du siège (13) de la plaquette (12).

5. Témoin d'usure selon l'une des revendications 1 à 4, **caractérisé** en ce que l'embout (5) présente une surépaisseur au niveau de sa zone de coopération avec le siège (13) de la plaquette (12) à laquelle il est fixé, ladite surépaisseur se prolongeant d'une distance correspondant à la longueur de la zone de coopération dudit embout (5) avec ledit siège.

6. Témoin d'usure selon l'une des revendications 1 à 5, **caractérisé** en ce que l'embout (5) est réalisé en un matériau choisi dans le groupe comprenant le polysulfure de phénylène, le polyamide 6,6, le polyamide 46, le polyether ethercétone.

7. Témoin d'usure selon l'une des revendications 1 à 5, **caractérisé** en ce que l'embout (5) présente une gorge (11) se prolongeant par une fente au niveau de la jonction entre l'embout (5) et la collerette (4), et correspondant sensiblement au périmètre de l'intersection dudit embout avec la collerette.

## Patentansprüche

1. Abnutzungsanzeiger für Kraftfahrzeugbremsbelag, mit einem elektrischen Kabel (1), das in einer Kunststoffhülle isoliert und dazu bestimmt ist, ein elektrisches Signal weiterzuleiten, das die Abnutzung des Belages (12) anzeigt, an dem er befestigt ist, und mit einem an einem seiner Enden befindlichen Ansatz (5), der in einem Sitz (13) aufnehmbar ist, der zu diesem Zweck im hinteren Teil des Belages (12) vorgesehen ist, wobei genannter Ansatz (5) in einem Kragen (4) endigt, der einen Anschlag bildet, der zur Anlage am Umfangsbereich des Sitzes (13) des Belages (12) vorgesehen ist, und wobei der genannte Ansatz dazu bestimmt ist, in den Sitz (13) des genannten Belages (12) eingepreßt zu werden, dadurch gekennzeichnet, daß der Ansatz (5) an das Kabel (1) angegossen ist und daß er einen längsverlaufenden Schlitz (11) aufweist, der sich von dem an das Kabel (1) angrenzenden Zentralbereich bis zum Umfang erstreckt, und zwar über die gesamte Länge des Ansatzes (5) mit Ausnahme des Kragens (4).

2. Abnutzungsanzeiger nach Anspruch 1, dadurch gekennzeichnet, daß der Ansatz (5) einen zylindrischen Bereich (8) aufweist, der über seine gesamte Länge in Höhe des Kabels (1) abgestumpft ist, auf Höhe des Schlitzes (10) durch einen Bereich (9) in Form eines Parallelflach verlängert ist, dessen Mittelebene durch den Schlitz gebildet ist, wobei der genannte zylindrische Bereich (8) und der das Parallelflach bildende Bereich (9) dazu bestimmt sind, mit dem Sitz (13) bzw. einer Öffnung (14) zusammenzuwirken, die den genannten Sitz (13) mit der Peripherie des Belages (12) verbindet.

3. Abnutzungsanzeiger nach Anspruch 2, dadurch gekennzeichnet, daß der zylindrische (8) und der ein Parallelflach bildenden Bereich (9) durch Bereiche gleicher Form verlängert sind, die jedoch jeweils kleinere Durchmesser und Dicken aufweisen.

4. Abnutzungsanzeiger nach einem der Ansprüche 2 und 3, dadurch gekennzeichnet, daß die Seitenflächen (16, 17) des ein Parallelflach bildenden Bereiches (9) zum Kabel (1) senkrechte Rippen (16) besitzen, die zur Zusammenwirkung mit der Öffnung (14) des Sitzes (13) des Belages (12) bestimmt sind.

5. Abnutzungsanzeiger nach einem der Ansprüche 1 bis 4, dadurch gekennzeichnet, daß der Ansatz (5) auf Höhe seines Bereiches, der mit dem Sitz (13) des Belages (12) zusammenwirkt, an dem er befestigt ist, ein Übermaß aufweist, wobei sich genanntes Übermaß über eine Strecke fortsetzt, die der Länge des Bereiches entspricht, in dem der genannte Ansatz (5) mit dem genannten Sitz zusammenwirkt.

6. Abnutzungsanzeiger nach einem der Ansprüche 1 bis 5, dadurch gekennzeichnet, daß der Ansatz (5) aus einem Werkstoff gefertigt ist, der ausgewählt ist aus der Gruppe bestehend aus Phenylen-Polysulfid, Polyamid 6,6, Polyamid 46 und Polyether-Etherketon.

7. Abnutzungsanzeiger nach einem der Ansprüche 1 bis 5, dadurch gekennzeichnet, daß der Ansatz (5) eine Einkehlung (11) aufweist, die auf der Ebene der Verbindung zwischen Ansatz (5) und Kragen (4) durch einen Schlitz verlängert ist und im wesentlichen dem Umfang der Schnittlinie zwischen dem genannten Ansatz und dem Kragen entspricht.

## Claims

1. A brake lining wear indicator for a motor vehicle comprising an electric cable (1) insulated in a plastic sheath, and intended to route an electric signal signalling the wear of the lining (12) to which it is fixed, and comprising at one of its ends an end-piece (5), capable of being received in the seat (13) provided for this purpose in the rear part of the lining (12), the said end-piece (5) terminating in a collar (4) forming a stop intended to rest on the peripheral zone at the seat (13) of the lining (12), the said end-piece being intended to be forcibly inserted into the seat (13) of the said lining (12),
**characterised in that** the end-piece (5) is moulded onto the cable (1),
**and in that** it has a longitudinal slot (10), extending radially from the central zone adjacent to the cable (1) right to the periphery, and over the entire length of the end-piece with the exception of the collar (4).

2. A wear indicator according to Claim 1,
**characterised in that** the end-piece (5) has a cylindrical zone (8) truncated over its whole length at the level of the cable (1), extending at the level of the slot (10) by a parallelepipedic zone (9), the median plane of which is formed by the actual slot, the said cylindrical (8) and parallelepipedic (9) zones being intended to cooperate respectively with the seat (13) and an opening (14) joining the said seat (13) to the periphery of the lining (12).

3. A wear indicator according to Claim 2,
**characterised in that** the cylindrical (8) and parallelepipedic (9) zones respectively extend in zones of the same shape, but having a smaller diameter and thickness respectively.

4. A wear indicator according to one of Claims 2 and 3,
**characterised in that** the lateral faces (16, 17) of the parallelepipedic zone (9) comprise ribs (16) perpendicular to the cable (1), intended to cooperate with the said opening (14) of the seat (13) of the lining (12).

5. A wear indicator according to one of Claims 1 to 4,
**characterised in that** the end-piece (5) has a thicker portion at the level of its zone of cooperation with the seat (13) of the lining (12) to which it is fixed, the said thicker portion being extended by a distance corresponding to the length of the zone of cooperation of the said end-piece (5) with the said seat.

6. A wear indicator according to one of Claims 1 to 5,
**characterised in that** the end-piece (5) is made from a material chosen from the group including phenylene polysulphide, polyamide 6.6, polyamide 46, polyetheretherketone.

7. A wear indicator according to one of Claims 1 to 5,
**characterised in that** the end-piece (5) has a groove (11) extended by a slot at the level of the junction between the end-piece (5) and the collar (4), and corresponding roughly to the perimeter of the intersection of the said end-piece with the collar.
